(19) Europäisches Patentamt
European Patent Office
Office européen des brevets

(11) **EP 4 449 887 A1**

(12) **EUROPEAN PATENT APPLICATION**
published in accordance with Art. 153(4) EPC

(43) Date of publication:
**23.10.2024 Bulletin 2024/43**

(21) Application number: **22907448.9**

(22) Date of filing: **13.12.2022**

(51) International Patent Classification (IPC):
**A23L 27/00** (2016.01)        **A23C 9/00** (2006.01)
**A23G 9/00** (2006.01)

(52) Cooperative Patent Classification (CPC):
**A23C 9/00; A23G 9/00; A23L 27/00**

(86) International application number:
**PCT/JP2022/045894**

(87) International publication number:
**WO 2023/112924 (22.06.2023 Gazette 2023/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.12.2021   JP 2021201433**

(71) Applicant: **THE NISSHIN OILLIO GROUP, LTD.
Tokyo 104-8285 (JP)**

(72) Inventors:
• **AOYAGI Kanji**
  **Yokohama-shi, Kanagawa 235-8558 (JP)**
• **SEKIGUCHI Yoshinori**
  **Yokohama-shi, Kanagawa 235-8558 (JP)**
• **ISAKA Daisuke**
  **Yokohama-shi, Kanagawa 235-8558 (JP)**
• **ITO Tomoya**
  **Yokohama-shi, Kanagawa 235-8558 (JP)**
• **ENDO Yoriko**
  **Yokohama-shi, Kanagawa 235-8558 (JP)**

(74) Representative: **Hasegawa, Kan
Patentanwaltskanzlei Hasegawa
Untere Hauptstraße 56
85354 Freising (DE)**

(54) **METHOD FOR IMPROVING MILKY FLAVOR OF FOOD/BEVERAGE AND FOOD/BEVERAGE MILKY FLAVOR IMPROVER**

(57)    An object of the present invention is to provide a method for improving the milk flavor of food and/or beverages having a milk flavor, and to improve the milk flavor of food and/or beverages having a milk flavor. Specifically, the present invention provides: a method for improving milk flavor of food/beverages, comprising: formulating caprylic acid and capric acid in the food/beverages having a milk flavor so as to satisfy condition A (the food and/or beverages contain 0.001 to 0.2 parts by mass of caprylic acid and 0.0003 to 0.035 parts by mass of capric acid per 100 parts by mass of milk solids-not-fat in the food/beverages) and/or condition B, (the food and/or beverages contain 0.0035 to 0.3 parts by mass of caprylic acid and 0.0013 to 0.055 parts by mass of capric acid per 100 parts by mass of milk solids-not-fat in the food/beverages).

EP 4 449 887 A1

## Description

Technical Field

The present invention relates to a method for improving milk flavor of food and/or beverages, food and/or beverages, and a milk flavor improver.

Background Art

The milk flavor represented by the flavors of milk, butter and fresh cream is an important element that determines the tastiness of foods such as beverages, cream, cheese, confectionery and bread. In order to impart the characteristics of milk flavor, various milk fats such as region-limited butter, fermentation-treated fermentation butter, fractionated butteroil in which the oleic-rich portion (liquid portion) and the palmitin-rich portion (solid portion) are fractionated, etc. are used. Also, as shown in Patent Literature 1, the development of flavor oils and/or fats obtained by heat-treating a mixture containing oils and/or fats, lipid-protein complexes, milk solids and water at 80 to 180°C, then cooling it to a temperature at which it does not solidify, and removing insoluble matter from the treated liquid using separation means has been carried out. The impartation of milk flavor by various milk-processed flavoring materials and flavors is also widely practiced.

Food and/or beverages having a milk flavor containing milk, butter, cheese, powdered milk, etc. require a relatively large amount of these milk-derived materials to be formulated in the food and/or beverages to enhance the milk flavor, which is costly. On the other hand, impartation of milk flavor using flavors is relatively inexpensive and easy to achieve the effect. However, imparting milk flavor with flavors has limitations in its effect, such as lack of flavor depth, difficulty in expressing stable and lasting flavor, and loss of flavor due to heating. Therefore, there has been a demand for the development of a method to enhance the milk flavor at low cost without the hassle.

Citation List

Patent Literatures

Patent Literature 1: Japanese Patent Application Publication No. 2018-68224

Summary of Invention

Problems to be solved by the invention

One of the objects of the present invention is to provide a method for improving the milk flavor of food and/or beverages having a milk flavor, and to improve the milk flavor of food and/or beverages having a milk flavor. Another object of the present invention is to provide a milk flavor improver that improves the milk flavor of food and/or beverages having a milk flavor. Another object of the present invention is to provide food and/or beverages with improved milk flavor and a manufacturing method thereof.

Means for solution of the problems

The present inventors have diligently studied to achieve the above-mentioned objects. As a result, they have found that the milk flavor is enhanced when caprylic acid and capric acid are contained in a specific amount in food and/or beverages having a milk flavor. This led to the completion of the present invention.

[1] A method for improving the milk flavor of food and/or beverages having a milk flavor, comprising: formulating caprylic acid and capric acid in the food and/or beverages so as to satisfy condition A and/or condition B, where

Condition A: The food and/or beverages contain 0.001 to 0.2 parts by mass of caprylic acid and 0.0003 to 0.035 parts by mass of capric acid per 100 parts by mass of milk solids-not-fat in the food and/or beverages; and
Condition B: The food and/or beverages contain 0.0035 to 0.3 parts by mass of caprylic acid and 0.0013 to 0.055 parts by mass of capric acid per 100 parts by mass of milk solids-not-fat in the food and/or beverages.

[2] The milk flavor improving method according to [1], comprising: formulating an emulsifier having an HLB of 3.5 or less in the food and/or beverages.

[3] Food and/or beverages comprising: caprylic acid and capric acid, and satisfying the following condition A and/or condition B,
where

Condition A: The food and/or beverages contain 0.001 to 0.2 parts by mass of caprylic acid and 0.0003 to 0.035 parts by mass of capric acid per 100 parts by mass of milk solids-not-fat in the food and/or beverages; and
Condition B: The food and/or beverages contain 0.0035 to 0.3 parts by mass of caprylic acid and 0.0013 to 0.055 parts by mass of capric acid per 100 parts by mass of milk solids-not-fat in the food and/or beverages.

[4] The food and/or beverages according to [3], further comprising: an emulsifier having an HLB of 3.5 or less.
[5] A milk flavor improver for food and/or beverages having a milk flavor, comprising: caprylic acid and capric acid, wherein a content ratio (mass ratio) of caprylic acid to capric acid is caprylic acid content: capric acid content=1:60 to 1000:1.
[6] The milk flavor improver according to [5], further comprising: an emulsifier having an HLB of 3.5 or less.

Furthermore, the present invention may also be as follows.

[1] A method for improving milk flavor of food and/or beverages, comprising: formulating caprylic acid and capric acid in the food and/or beverages having a milk flavor so as to satisfy condition A and/or condition B, where

Condition A: The food and/or beverages contain 0.001 to 0.2 parts by mass of caprylic acid and 0.0003 to 0.035 parts by mass of capric acid per 100 parts by mass of milk solids-not-fat in the food and/or beverages; and
Condition B: The food and/or beverages contain 0.0035 to 0.3 parts by mass of caprylic acid and 0.0013 to 0.055 parts by mass of capric acid per 100 parts by mass of milk solids-not-fat in the food and/or beverages.

[2] The milk flavor improving method according to [1], further comprising: formulating an emulsifier having an HLB of 4.5 or less in the food and/or beverages.
[3] Food and/or beverages with improved milk flavor, comprising: caprylic acid and capric acid, and satisfying the following condition A and/or condition B, where

Condition A: The food and/or beverages contain 0.001 to 0.2 parts by mass of caprylic acid and 0.0003 to 0.035 parts by mass of capric acid per 100 parts by mass of milk solids-not-fat in the food and/or beverages; and
Condition B: The food and/or beverages contain 0.0035 to 0.3 parts by mass of caprylic acid and 0.0013 to 0.055 parts by mass of capric acid per 100 parts by mass of milk solids-not-fat in the food and/or beverages.

[4] The food and/or beverages according to [3], further comprising: an emulsifier having an HLB of 4.5 or less.
[5] A milk flavor improver for food and/or beverages having a milk flavor, comprising: caprylic acid and capric acid, wherein a content ratio (mass ratio) of caprylic acid to capric acid is [caprylic acid content] : [capric acid content]=1:60 to 1000:1.
[6] The milk flavor improver according to [5], further comprising: an emulsifier having an HLB of 4.5 or less.
[7] A method for manufacturing food and/or beverages with improved milk flavor, comprising: formulating caprylic acid and capric acid in the food and/or beverages having a milk flavor so as to satisfy condition A and/or condition B, where

Condition A: The food and/or beverages contain 0.001 to 0.2 parts by mass of caprylic acid and 0.0003 to 0.035 parts by mass of capric acid per 100 parts by mass of milk solids-not-fat in the food and/or beverages; and
Condition B: The food and/or beverages contain 0.0035 to 0.3 parts by mass of caprylic acid and 0.0013 to 0.055 parts by mass of capric acid per 100 parts by mass of milk solids-not-fat in the food and/or beverages.

[8] The manufacturing method according to [7], further comprising: formulating an emulsifier having an HLB of 4.5 or less in the food and/or beverages having a milk flavor.

Advantageous Effects of Invention

According to the present invention, the milk flavor of food and/or beverages can be improved. In addition, since caprylic acid and capric acid do not volatilize by heating during cooking, the milk flavor enhancing effect is not reduced by heating.

Description of Embodiments

The present invention is described in detail below. In the modes for carrying out the present invention, "A (value) to B (value)" means A or more and B or less. The preferable modes or more preferable modes exemplified below can be appropriately combined with each other irrespective of the expression of "preferable" or "more preferable." The numerical ranges described are examples, and irrespective of the expression of "preferable" or "more preferable," the upper limit and lower limit of each range and the numerical values in the Examples can be appropriately combined to form a preferable range. Furthermore, the terms "containing" or "comprises" may be appropriately read as "essentially consists of" or "consisting of."

[Method for Improving Milk Flavor]

(Caprylic acid, capric acid)

The milk flavor improving method of the present invention can synergistically improve the milk flavor of the milk flavor-containing food and/or beverages by formulating caprylic acid and capric acid in the milk flavor-containing food and/or beverages so as to satisfy condition A and/or condition B. Here, conditions A and B are as follows.

Condition A: The food and/or beverages contain 0.001 to 0.2 parts by mass of caprylic acid and 0.0003 to 0.035 parts by mass of capric acid per 100 parts by mass of milk solids-not-fat in the food and/or beverages; and
Condition B: The food and/or beverages contain 0.0035 to 0.3 parts by mass of caprylic acid and 0.0013 to 0.055 parts by mass of capric acid per 100 parts by mass of milk solids-not-fat in the food and/or beverages.

Here, the "improvement" of the milk flavor includes not only further enhancing the milk flavor inherently possessed by food and/or beverages originally having a milk flavor, but also maintaining the milk flavor inherently possessed by food and/or beverages originally having a milk flavor by first reducing it and then formulating caprylic acid and capric acid in the food and/or beverages under the above conditions. In this sense, maintaining the milk flavor that has been once reduced can be said to be an "improvement" of the milk flavor.

The caprylic acid and capric acid used in the present invention may be in the form of free fatty acids in the oral cavity, and can be used as free fatty acids and/or fatty acid salts, with free fatty acids being preferable. Preferable examples of fatty acid salts include metal salts such as fatty acid sodium salts, fatty acid potassium salts, and fatty acid calcium salts. It should be noted that by formulating oils and/or fats having caprylic acid and capric acid as constituent fatty acids of glycerides and having undergone partial hydrolysis, such as coconut oil, palm kernel oil, and medium chain fatty acid triglycerides (MCT), the free caprylic acid and capric acid in the oils and/or fats can be used as the caprylic acid and capric acid used in the present invention. Also, medium chain fatty acid triglycerides synthesized from caprylic acid or capric acid and glycerol, in which unreacted caprylic acid or capric acid remains, can be used.

In condition A, it is preferable that the food and/or beverages contain 0.01 to 0.2 parts by mass of caprylic acid and 0.0003 to 0.035 parts by mass of capric acid per 100 parts by mass of milk solids-not-fat in the food and/or beverages. It is also preferable that the food and/or beverages contain 0.003 to 0.2 parts by mass of caprylic acid and 0.005 to 0.035 parts by mass of capric acid per 100 parts by mass of milk solids-not-fat in the food and/or beverages.

It is more preferable that the food and/or beverages contain 0.008 to 0.1 parts by mass of caprylic acid and 0.005 to 0.035 parts by mass of capric acid per 100 parts by mass of milk solids-not-fat in the food and/or beverages.

It is further preferable that the food and/or beverages contain 0.012 to 0.08 parts by mass of caprylic acid and 0.007 to 0.025 parts by mass of capric acid per 100 parts by mass of milk solids-not-fat in the food and/or beverages.

In condition B, it is preferable that the food and/or beverages contain 0.2 to 0.3 parts by mass of caprylic acid and 0.0013 to 0.035 parts by mass of capric acid per 100 parts by mass of milk solids-not-fat in the food and/or beverages. It is more preferable that the food and/or beverages contain 0.20 to 0.26 parts by mass of caprylic acid and 0.0013 to 0.025 parts by mass of capric acid per 100 parts by mass of milk solids-not-fat in the food and/or beverages.

Also, in condition B, it is preferable that the food and/or beverages contain 0.0035 to 0.2 parts by mass of caprylic acid and 0.035 to 0.033 parts by mass of capric acid per 100 parts by mass of milk solids-not-fat in the food and/or beverages. It is more preferable that the food and/or beverages contain 0.004 to 0.16 parts by mass of caprylic acid and 0.035 to 0.05 parts by mass of capric acid per 100 parts by mass of milk fat solids in the food and/or beverages.

It should be noted that in the present invention, milk solids-not-fat refers to ingredients derived from milk, excluding water and milk fat. The milk solids-not-fat of milk and milk products can be measured, for example, by the method described in "Annexed Table 2, Compositional Standards and Standards of Manufacturing, Cooking, and Storing Condition of Milk, etc., (7) Testing Methods of Compositional Standards of Milk, etc." in the "Ministerial Ordinance on Milk and Milk Products Concerning Compositional Standards, etc. (Ministry of Health and Welfare Ordinance No. 52, 1951)." Specifically, an aluminum flat-bottom weighing dish with a bottom diameter of 5 cm or more is dried in a dryer at a temperature of 98 to 100°C until a constant weight is obtained. A sample of 2.5 to 3 g is weighed into the weighing dish, carefully heated on a water bath to evaporate most of the moisture, then transferred to the dryer and dried until a constant weight is obtained, and the mass of the dried product is obtained, and the percentage of the dried product is calculated. The percentage of milk solids-not-fat is obtained by subtracting the percentage of milk fat described later from the percentage of the dried product.

The dryer used should be capable of being adjusted to a temperature of $99\pm1$°C and should be of a structure that does not allow the sample to be overheated above the specified temperature due to conductive heat from the walls and shelves, radiant heat from the hot plate, etc.

It should be noted that for liquid milk with a milk fat content lower than that of cow's milk, such as cow's milk and processed milk, 10 ml of sulfuric acid is added to a Gerber milk fat meter using a sulfuric acid pipette, then 11 ml of milk is slowly layered on the sulfuric acid (specific gravity 1.82 to 1.825 at 15°C) using a cow's milk pipette, and further 1 ml of pure amyl alcohol (boiling point 128 to 132°C, specific gravity about 0.81 at 15°C, which does not separate oily substances when 2 ml of this product is used for blind test in the same manner as cow's milk with 11 ml of water and allowed to stand overnight) is added, stoppered with a rubber stopper, and the milk is dissolved while pressing the stopper with fingers, then immersed in a warm bath at about 65°C for 15 minutes, centrifuged (700 revolutions or more per minute) for 3 to 5 minutes, further immersed in a warm bath at about 65°C to make the temperature constant, and the degree of the separated fat layer is taken as the amount of milk fat (percentage of milk fat) per 100 parts of milk.

Also, for liquids and pastes with a milk fat content higher than that of cow's milk, such as concentrated milk, unsweetened condensed milk and sweetened condensed milk, 20 g of the sample is weighed, diluted with warm water, placed in a 100 ml volumetric flask and made up to volume to obtain a diluted sample, and 10 ml of the diluted sample is taken into a Röhrig tube, and 2 ml of ammonia water (25-30%, colorless and transparent) and 10 ml of ethanol (95-96%) are added in order, mixing well each time.

To the Röhrig tube to which ethanol has been added, 25 ml of ether is added, and when the color becomes uniform by gently rotating, the ether gas is removed, and the tube is shaken vigorously for 30 seconds while holding it horizontally. Next, 25 ml of petroleum ether (boiling point 60°C or lower) is added, shaken in the same manner for 30 seconds, the stopper is loosened, and the tube is allowed to stand upright for 2 hours or more until the supernatant becomes completely clear. The supernatant is placed in a beaker, the constant weight of which has been previously determined.

To the Röhrig tube, 25 ml of ether is added, then 25 ml of petroleum ether is added, shaken in the same manner for 30 seconds, the stopper is loosened, and the tube is allowed to stand upright for 2 hours or more until the supernatant becomes completely clear, and the supernatant is added to the beaker, and the tip of the side tube is washed with an equal mixture of ether and petroleum ether and added to the beaker.

The beaker is heated to about 75°C to evaporate the solvent, dried for 1 hour in a dryer at a temperature of 100 to 105°C, and the increase in weight of the beaker for which the constant weight has been determined is taken as the amount of milk fat, and the percentage of milk fat is calculated.

Also, milk fat is measured as follows for powders such as whole milk powder, cream powder and sweetened milk powder, and for cream. For whole milk powder, cream powder and sweetened milk powder, 1 g of the sample is weighed into a small beaker, and for cream, 5 g of the sample is weighed into a small beaker, dissolved in about 4 ml of warm water, transferred to a Röhrig tube, and the beaker is further washed twice with 3 ml of warm water, then 2 ml of ammonia water and 10 ml of ethanol (95-96%), followed by addition to the Röhrig tube in order, and the stopper is put on and mixed well each time.

To the Röhrig tube to which ethanol has been added, 25 ml of ether is added, and when the color becomes uniform by gently rotating, the ether gas is removed, and the tube is shaken vigorously for 30 seconds while holding it horizontally. Next, 25 ml of petroleum ether (boiling point 60°C or lower) is added, shaken in the same manner for 30 seconds, the stopper is loosened, and the tube is allowed to stand upright for 2 hours or more until the supernatant becomes completely clear. The supernatant is placed in a beaker, the constant weight of which has been previously determined.

To the Röhrig tube, 25 ml of ether is added, then 25 ml of petroleum ether is added, shaken in the same manner for 30 seconds, the stopper is loosened, and the tube is allowed to stand upright for 2 hours or more until the supernatant becomes completely clear, and the supernatant is added to the beaker, and the tip of the side tube is washed with an equal mixture of ether and petroleum ether and added to the beaker. The same operation is performed one more time.

The beaker is heated to about 75°C to evaporate the solvent, dried for 1 hour in a dryer at a temperature of 100 to 105°C, and the increase in weight of the beaker for which the constant weight has been determined is taken as the amount of milk fat, and the percentage of milk fat is calculated.

(Emulsifier)

It is preferable that the milk flavor improving method of the present invention further formulates an emulsifier having an HLB of 4.5 or less, or 3.5 or less, in the food and/or beverages. When caprylic acid, capric acid and an emulsifier having an HLB of 4.5 or less coexist, the milk flavor can be further enhanced. Preferable examples of the emulsifier having an HLB of 4.5 or less include one or more selected from the group consisting of polyglycerol fatty acid esters, polyglycerol condensed ricinoleic acid esters, sucrose fatty acid esters, and sorbitan fatty acid esters.

The HLB is an abbreviation for Hydrophile Lipophile Balance, which is an indicator for knowing whether an emulsifier is hydrophilic or lipophilic, and takes a value from 0 to 20. The smaller the HLB value, the stronger the lipophilicity. In the present invention, the Atlas method is used for calculating the HLB value. The Atlas method calculates the HLB value from the following equation:

$$HLB = 20 \times (1 - S/A)$$

S: Saponification value
A: Acid value of fatty acids in the ester

According to this calculation method, the HLB value is calculated as an arithmetic mean.
The HLB of the emulsifier used in the present invention is more preferably 3.5 or less, or 0 to 3.0, further preferably 0 to 2.5, and most preferably 1 to 2.
In the milk flavor improving method of the present invention, it is preferable that the emulsifier having an HLB of 4.5 or less is 0.2 times by mass or more relative to the total amount of caprylic acid and capric acid, more preferably 0.2 to 100 times by mass, further preferably 0.5 to 50 times by mass, and even further preferably 1.0 to 10 times by mass. Also, the content of the emulsifier having an HLB of 4.5 or less in the food and/or beverages is preferably 0.00001 to 5% by mass, more preferably 0.0004 to 3% by mass, and further preferably 0.0005 to 1% by mass. Also, it is more preferably 0.001 to 3 parts by mass, and further preferably 0.04 to 1 parts by mass, per 100 parts by mass of milk solids-not-fat.
The constituent fatty acids of the polyglycerol fatty acid esters, sucrose fatty acid esters, and sorbitan fatty acid esters are preferably linear fatty acids having 16 to 22 carbon atoms, and examples thereof include palmitic acid, stearic acid, behenic acid, oleic acid, linoleic acid, linolenic acid, erucic acid, and the like. It is preferable that 60% by mass or more of the constituent fatty acids are linear unsaturated fatty acids in order to prevent solidification at low temperatures. It is more preferable that 70 to 100% by mass of the constituent fatty acids are linear unsaturated fatty acids, and further preferable that 80 to 98% by mass of the constituent fatty acids are linear unsaturated fatty acids. As for the linear unsaturated fatty acids, linear unsaturated fatty acids having 16 to 22 carbon atoms can be used. Preferable examples of the linear unsaturated fatty acids include one or more fatty acids selected from the group consisting of oleic acid, linoleic acid, linolenic acid, and erucic acid. It is particularly preferable that 65 to 90% by mass of the constituent fatty acids are oleic acid and/or erucic acid. The constituent fatty acids other than the linear unsaturated fatty acids are linear saturated fatty acids. Preferable examples of the linear saturated fatty acids include linear saturated fatty acids having 6 to 22 carbon atoms, and more preferably linear saturated fatty acids having 16 to 18 carbon atoms. It should be noted that the constituent fatty acids of the polyglycerol condensed ricinoleic acid esters are almost entirely ricinoleic acid.
The polyglycerol fatty acid esters are compounds synthesized by esterifying polyglycerol with fatty acids. Commercially available products may be used as the polyglycerol fatty acid esters, and two or more may be used in combination. The polyglycerol used as a raw material for the polyglycerol fatty acid esters is generally obtained by using glycerol as a raw material, dehydrating and condensing it at a high temperature in the presence of an alkali catalyst such as caustic soda, and distilling, deodorizing, and bleaching the product as necessary. These polyglycerols used as raw materials for the polyglycerol fatty acid esters are also called reaction polyglycerols, and are, in theory, mixtures of polyglycerols having different degrees of polymerization ranging from 1 to ∞, with a wide distribution of degrees of polymerization. Since polyglycerol fatty acid esters having a degree of polymerization of 4 or more are generally difficult to isolate, they are allowed to be mixtures of polyglycerol fatty acid esters having various degrees of polymerization.
In the present invention, the average degree of polymerization (percentage) indicates the degree of polymerization of the polyglycerol constituting the polyglycerol fatty acid esters. The average degree of polymerization (n) mentioned here can be derived, for example, from the following formula (Formula 1) and (Formula 2) calculated from the hydroxyl value of the polyglycerol used as a raw material for the polyglycerol fatty acid esters.

$$\text{(Formula 1) Molecular weight} = 74n + 18$$

$$\text{(Formula 2) Hydroxyl value} = 56110 \times (n+2)/\text{Molecular weight}$$

General polyglycerols are sold as tetraglycerol (average degree of polymerization of 4), hexaglycerol (average degree of polymerization of 6), decaglycerol (average degree of polymerization of 10), etc., based on the average degree of polymerization determined by the terminal group analysis method in which the hydroxyl value is measured. Therefore, the average degree of polymerization is a calculated value and may differ from the actual degree of polymerization.

The average degree of polymerization of the polyglycerol moiety of the polyglycerol fatty acid esters is preferably 4 to 12, more preferably 4 to 10, and further preferably 5 to 6.

The polyglycerol condensed ricinoleic acid esters are esters of polyglycerol and a polymer of ricinoleic acid, and can be obtained, for example, by an esterification reaction between ricinoleic acid, which is obtained mainly from castor oil, and polyglycerol. The polyglycerol moiety of the polyglycerol condensed ricinoleic acid esters has a distribution of degrees of polymerization in the same manner as the polyglycerol fatty acid esters described above, and is indicated by the average degree of polymerization. The average degree of polymerization of the polyglycerol moiety of the polyglycerol condensed ricinoleic acid esters is preferably about 2 to 12, more preferably about 2 to 10, and further preferably about 3 to 8.

Commercially available products may be used as the polyglycerol condensed ricinoleic acid esters. Examples of commercially available products include SY-Glyster CR-310, CR-500, CR-ED, CRS-75, etc. manufactured by Sakamoto Yakuhin Kogyo Co., Ltd., Sunsoft No. 818DG, 818R, 818SK, 818H, etc. manufactured by Taiyo Kagaku Co., Ltd., and Poem PR-300, etc. manufactured by Riken Vitamin Co., Ltd., which can be appropriately used. Two or more polyglycerol condensed ricinoleic acid esters may be used in combination.

The sucrose fatty acid esters and sorbitan fatty acid esters are esters of sucrose or sorbitan and fatty acids, and commercially available products can be used. Examples of commercially available products of sucrose fatty acid esters include RYOTO Sugar Ester POS-135 (sucrose-mixed fatty acid esters: oleic acid about 40%, palmitic acid about 30%, stearic acid about 30%), RYOTO Sugar Ester S-070 (sucrose stearic acid ester), RYOTO Sugar Ester O-170 (sucrose oleic acid ester), RYOTO Sugar Ester ER-290 (sucrose erucic acid ester), etc. manufactured by Mitsubishi Chemical Corporation, which can be appropriately used. Examples of commercially available products of sorbitan fatty acid esters include RIKEMAL OR-85, RIKEMAL B-150, Poem S-65V, etc. manufactured by Riken Vitamin Co., Ltd., which can be appropriately used. Two or more sucrose fatty acid esters and sorbitan fatty acid esters may be used in combination.

In the milk flavor improving method of the present invention, caprylic acid and capric acid are formulated in the food and/or beverages as described above, but as a method of formulation, caprylic acid and capric acid can be added and mixed individually. Caprylic acid and capric acid may also be premixed with the emulsifier having an HLB of 4.5 or less described above and/or oils and/or fats, and mixed with other raw materials for food and/or beverages. The conditions for addition and mixing are those of conventionally known methods.

[Food and/or Beverages]

The food and/or beverages whose milk flavor is improved by the present invention (i.e., the raw materials for food and/or beverages with improved milk flavor) can be food and/or beverages having a milk flavor. As long as it has a milk flavor, it may be any beverage or food. The ingredients of milk flavor are ingredients derived from milk, and are preferably milk solids-not-fat. Food and/or beverages also include aqueous solutions that simply contain milk flavor. Specific examples of beverages include cow's milk, dairy beverages, processed milk, lactic acid bacterium beverages, fruit juice-containing dairy beverages, carbonated beverages, functional beverages, and the like. Examples of cow's milk include modified milk, low-fat milk, non-fat milk, diluted milk, and the like. Examples of dairy beverages include milk coffee, fruit milk, strawberry milk, and the like. Specific examples of foods (dairy products) include ice cream (lacto-ice), fresh cream, whipped cream, coffee cream, condensed milk, powdered milk, cheese, yogurt, sour cream, butter, buttermilk, butteroil, and the like.

The food and/or beverages with improved milk flavor of the present invention contain caprylic acid and capric acid, and satisfy the following condition A and/or condition B.

Condition A: The food and/or beverages contain 0.001 to 0.2 parts by mass of caprylic acid and 0.0003 to 0.035 parts by mass of capric acid per 100 parts by mass of milk solids-not-fat in the food and/or beverages; and
Condition B: The food and/or beverages contain 0.0035 to 0.3 parts by mass of caprylic acid and 0.0013 to 0.055 parts by mass of capric acid per 100 parts by mass of milk solids-not-fat in the food and/or beverages.

Caprylic acid, capric acid, condition A, and condition B are as described in the above section "[Method for Improving Milk Flavor]."

The concentration of caprylic acid in the food and/or beverages is, for example, 0.1 to 100 ppm, preferably 0.2 to 80 ppm, more preferably 0.5 to 50 ppm, and further preferably 1 to 30 ppm. Also, the concentration of capric acid in the food and/or beverages is, for example, 0.01 to 100 ppm, preferably 0.05 to 50 ppm, more preferably 0.1 to 30 ppm, and further preferably 1 to 10 ppm.

The concentration of caprylic acid in the oil phase of the food and/or beverages is, for example, 5 to 5000 ppm, preferably 10 to 4000 ppm, more preferably 50 to 3000 ppm, and further preferably 100 to 2000 ppm. Also, the concentration of capric acid in the food and/or beverages is, for example, 1 to 2000 ppm, preferably 5 to 1000 ppm, more preferably 10 to 750 ppm, and further preferably 30 to 500 ppm.

The food and/or beverages of the present invention have improved milk flavor when they contain an emulsifier having an HLB of 4.5 or less. The emulsifier having an HLB of 4.5 or less is as described in the above section "[Method for Improving Milk Flavor]."

[Milk Flavor Improver]

The milk flavor improver of the present invention contains caprylic acid and capric acid, and the content ratio (mass ratio) of caprylic acid to capric acid is [caprylic acid content] : [capric acid content]=1:60 to 1000:1. By formulating this content ratio of milk flavor improver in the food and/or beverages, the contents of caprylic acid and capric acid in the food and/or beverages can be easily made to satisfy condition A and/or condition B,
where

> Condition A: The food and/or beverages contain 0.001 to 0.2 parts by mass of caprylic acid and 0.0003 to 0.035 parts by mass of capric acid per 100 parts by mass of milk solids-not-fat in the food and/or beverages; and
> Condition B: The food and/or beverages contain 0.0035 to 0.3 parts by mass of caprylic acid and 0.0013 to 0.055 parts by mass of capric acid per 100 parts by mass of milk solids-not-fat in the food and/or beverages.

The milk flavor improver of the present invention can further improve the milk flavor by containing an emulsifier having an HLB of 4.5 or less. The emulsifier having an HLB of 4.5 or less is preferably 0.2 times by mass or more, more preferably 0.2 to 100 times by mass, further preferably 0.5 to 50 times by mass, and even more preferably 1.0 to 10 times by mass relative to the total amount of caprylic acid and capric acid.

The total content of caprylic acid and capric acid is preferably 0.1 to 100% by mass, more preferably 0.1 to 99% by mass, and further preferably 1 to 97% by mass or 1 to 95% by mass, relative to the total mass of the milk flavor improver of the present invention.

(Other ingredients)

The milk flavor improver of the present invention can include other ingredients as necessary. For example, edible oils and/or fats can be blended to make the taste improving agent have fluidity. The edible oils and/or fats are not particularly limited as long as they are suitable for food. Examples thereof include various vegetable oils and/or fats and animal oils and/or fats such as soybean oil, rapeseed oil, rice oil, sunflower oil, safflower oil, olive oil, canola oil, corn oil, cottonseed oil, sesame oil, palm oil, palm kernel oil, coconut oil, cocoa butter, peanut oil, hazelnut oil, macadamia nut oil, milk fat, beef tallow, pork lard (lard), as well as processed oils and/or fats obtained by subjecting these to one or two or more treatments selected from hydrogenation, fractionation, and interesterification, and synthetic oils such as medium chain fatty acid triglycerides (MCT). These oils and/or fats may be used alone or in combination of two or more. The edible oils and/or fats may be a purified oil, crude oil, or roasted oil, and is preferably a purified oil. It is preferable that the edible oils and/or fats are the remainder excluding the caprylic acid, capric acid, and the emulsifier having an HLB of 4.5 or less described above. For example, it is preferable to incorporate 50 to 99.9% by mass, and more preferably 60 to 99% by mass, in the milk flavor improver.

Also, additives such as antioxidants and thickeners can be formulated as necessary. Examples of antioxidants include tocopherols, ascorbic acids, and the like. These ingredients can be appropriately formulated at a blending amount of 5% by mass or less, and more preferably at a blending amount of 1% by mass or less.

It should be noted that other conditions and preferable modes are as described in the sections "[Method for Improving Milk Flavor]" and "[Food and/or Beverages]" above.

[Method for Manufacturing Food and/or Beverages]

The present invention further relates to a method for manufacturing food and/or beverages with improved milk flavor. Specifically, it is a method for manufacturing food and/or beverages with improved milk flavor, comprising: formulating caprylic acid and capric acid in the food and/or beverages having a milk flavor so as to satisfy condition A and/or condition B,
where

Condition A: The food and/or beverages contain 0.001 to 0.2 parts by mass of caprylic acid and 0.0003 to 0.035 parts by mass of capric acid per 100 parts by mass of milk solids-not-fat in the food and/or beverages; and
Condition B: The food and/or beverages contain 0.0035 to 0.3 parts by mass of caprylic acid and 0.0013 to 0.055 parts by mass of capric acid per 100 parts by mass of milk solids-not-fat in the food and/or beverages.

The method for manufacturing the food and/or beverages with improved milk flavor may further comprise adding an emulsifier having an HLB of 4.5 or less to the food and/or beverages having a milk flavor. Other conditions and preferable modes are as described in the sections "[Method for Improving Milk Flavor]," "[Food and/or Beverages]" and "[Milk Flavor Improver]" above.

Examples

The present invention will be further described in detail by the following Examples. However, the present invention should not be interpreted as being limited to the content of the following Examples.

It should be noted that non-fat milk solids are the ingredients obtained by subtracting the moisture content and milk fat from the target substance, as calculated in accordance with "Annexed Table 2, Compositional Standards and Standards of Manufacturing, Cooking, and Storing Condition of Milk, etc., (7) Testing Methods of Compositional Standards of Milk, etc." in the "Ministerial Ordinance on Milk and Milk Products Concerning Compositional Standards, etc. (Ministry of Health and Welfare Ordinance No. 52, 1951)."

[Evaluation of Diluted Milk 1]

(Diluted milk)

To 99.6 parts by mass of milk (milk solids-not-fat 8.8% by mass), a total of 0.4 parts by mass of caprylic acid (Tokyo Chemical Industry Co., Ltd.), capric acid (Tokyo Chemical Industry Co., Ltd.), and MCT (product name "O.D.O," The Nisshin OilliO Group, Ltd., triglyceride of caprylic acid and capric acid) were added and mixed. Furthermore, 400 parts by mass of water was mixed to obtain an evaluation sample (diluted milk, equivalent to 19.9% by mass milk).

It should be noted that caprylic acid and capric acid were dissolved in MCT in advance and added to the milk.

The blending amount of caprylic acid was adjusted to be 0 parts by mass, $12 \times 10^{-4}$ parts by mass, $48 \times 10^{-4}$ parts by mass, $240 \times 10^{-4}$ parts by mass, $480 \times 10^{-4}$ parts by mass, $1440 \times 10^{-4}$ parts by mass, $2400 \times 10^{-4}$ parts by mass, and $4800 \times 10^{-4}$ parts by mass per 100 parts by mass of milk solids-not-fat. The concentration of caprylic acid in the diluted milk at this time was 0 ppm by mass, 0.21 ppm by mass, 0.84 ppm by mass, 4.22 ppm by mass, 8.45 ppm by mass, 25.34 ppm by mass, 42.24 ppm by mass, and 84.48 ppm by mass, respectively.

Also, the blending amount of capric acid was adjusted to be 0 parts by mass, $1 \times 10^{-4}$ parts by mass, $4 \times 10^{-4}$ parts by mass, $16 \times 10^{-4}$ parts by mass, $80 \times 10^{-4}$ parts by mass, $160 \times 10^{-4}$ parts by mass, $480 \times 10^{-4}$ parts by mass, and $800 \times 10^{-4}$ parts by mass per 100 parts by mass of milk solids-not-fat. The concentration of capric acid in the diluted milk at this time was 0 ppm by mass, 0.02 ppm by mass, 0.07 ppm by mass, 0.28 ppm by mass, 1.41 ppm by mass, 2.82 ppm by mass, 8.45 ppm by mass, and 14.08 ppm by mass, respectively.

(Milk flavor evaluation 1)

Milk was diluted with water in a ratio (mass ratio) of 2 to 10 times to prepare 10% by mass milk, 20% by mass milk, 30% by mass milk, 40% by mass milk, and 50% by mass milk as reference diluted milks for milk flavor. Each reference diluted milk was taken into the mouth, and the milk flavor felt at that time was defined as 1 to 5 points as follows. The evaluation samples described above were taken into the mouth, and the points were given based on the points of the reference diluted milks. The evaluation was performed by a panel of 5 members, and the average score was used as the score of the evaluation samples, which is shown in Table 1.

<Milk flavor evaluation points>

5 points: Milk flavor of 50% by mass milk
4 points: Milk flavor of 40% by mass milk
3 points: Milk flavor of 30% by mass milk
2 points: Milk flavor of 20% by mass milk
1 point: Milk flavor of 10% by mass milk

Table 1

| | | | | Amount of caprylic acid per 100 parts by mass of milk solids-not-fat ($\times 10^{-4}$ parts by mass) | | | | | | | |
|---|---|---|---|---|---|---|---|---|---|---|---|
| | | | | 0 | 12 | 48 | 240 | 480 | 1440 | 2400 | 4800 |
| | | | | Concentration of caprylic acid in diluted milk (ppm) | | | | | | | |
| | | | | 0.00 | 0.21 | 0.84 | 4.22 | 8.45 | 25.34 | 42.24 | 84.48 |
| Amount of capric acid per 100 parts by mass of milk solids-not-fat ($\times 10^{-4}$ parts by mass) | 0 | Concentration of capric acid in diluted milk (ppm) | 0.00 | 2.0 | 2.0 | 2.0 | 2.0 | 2.0 | 2.0 | 1.4 | 1.0 |
| | 1 | | 0.02 | 2.0 | 2.0 | 2.0 | 2.4 | 2.6 | 2.0 | 1.6 | 1.0 |
| | 4 | | 0.07 | 2.0 | 3.0 | 3.0 | 3.4 | 3.6 | 3.2 | 2.0 | 1.0 |
| | 16 | | 0.28 | 2.0 | 3.0 | 3.0 | 3.6 | 3.8 | 3.4 | 3.0 | 1.0 |
| | 80 | | 1.41 | 2.0 | 3.0 | 3.4 | 4.0 | 4.6 | 3.6 | 3.0 | 1.0 |
| | 160 | | 2.82 | 2.0 | 3.0 | 3.8 | 4.6 | 4.8 | 3.8 | 3.0 | 1.0 |
| | 480 | | 8.45 | 1.2 | 2.0 | 3.0 | 3.0 | 3.0 | 3.0 | 2.4 | 1.0 |
| | 800 | | 14.08 | 1.2 | 1.2 | 1.2 | 1.2 | 1.2 | 1.2 | 1.2 | 1.0 |

Note: Underlined numerical values stand for milk flavor evaluation points.

Table 1

Note: Underlined numerical values stand for milk flavor evaluation points.

If the evaluation sample (diluted milk, equivalent to 19.9% by mass milk) has an evaluation higher than 2 points of the reference diluted milk (20% by mass milk) with almost the same concentration of milk, it can be said that the milk flavor is improved. As shown in Table 1, it was confirmed that the flavor of the diluted milk that satisfies the range of condition A (the food and/or beverages contain 0.001 to 0.2 parts by mass of caprylic acid and 0.0003 to 0.035 parts by mass of capric acid per 100 parts by mass of milk solids-not-fat in the food and/or beverages), and/or condition B (the food and/or beverages contain 0.0035 to 0.3 parts by mass of caprylic acid and 0.0013 to 0.055 parts by mass of capric acid per 100 parts by mass of milk solids-not-fat in the food and/or beverages) has an improved milk flavor compared to the reference diluted milk (20% by mass milk).

[Evaluation of Diluted Milk 2]

(Diluted milk)

To 99.6 parts by mass of milk (milk solids-not-fat 8.8% by mass), a total of 0.4 parts by mass of caprylic acid (Tokyo Chemical Industry Co., Ltd.), capric acid (Tokyo Chemical Industry Co., Ltd.), MCT (product name "O.D.O," The Nisshin OilliO Group, Ltd., triglyceride of caprylic acid and capric acid), and an emulsifier were added and mixed. Furthermore, 400 parts by mass of water was mixed to obtain an evaluation sample (diluted milk, equivalent to 19.9% by mass milk).

It should be noted that caprylic acid, capric acid, and the emulsifier were dissolved in MCT in advance and added to the milk.

The blending amount of caprylic acid was adjusted to be $240 \times 10^{-4}$ parts by mass per 100 parts by mass of milk solids-not-fat. The concentration of caprylic acid in the diluted milk at this time was 4.22 ppm by mass.

Also, the blending amount of capric acid was adjusted to be $80 \times 10^{-4}$ parts by mass per 100 parts by mass of milk solids-not-fat. The concentration of capric acid in the evaluation sample (diluted milk) at this time was 1.41 ppm by mass.

Also, the blending amount of the emulsifier was 0.0004 parts by mass per 500 parts by mass of diluted milk. The emulsifier used was polyglycerol condensed ricinoleic acid ester ("Sunsoft No. 818H," Taiyo Kagaku Co., Ltd., HLB about 2), sucrose erucic acid ester ("Ryoto Sugar Ester ER-290," Mitsubishi Chemical Corporation, HLB 2), and hexaglycerol trioleic acid ester ("Sunsoft A-173E," Taiyo Kagaku Co., Ltd., HLB 7).

(Milk flavor evaluation 2)

Milk was diluted with water in a ratio (mass ratio) of 2 to 10 times to prepare 10% by mass milk, 20% by mass milk, 30% by mass milk, 40% by mass milk, and 50% by mass milk as reference diluted milks for milk flavor. Each reference diluted milk was taken into the mouth, and the milk flavor felt at that time was defined as 1 to 5 points as follows. The evaluation samples described above were taken into the mouth, and the points were given based on the points of the reference diluted milks. The evaluation was performed by a panel of 5 members, and the average score was used as the score of the evaluation samples, which is shown in Table 2.

<Milk flavor evaluation points>

5 points: Milk flavor of 50% by mass milk
4 points: Milk flavor of 40% by mass milk
3 points: Milk flavor of 30% by mass milk
2 points: Milk flavor of 20% by mass milk
1 point: Milk flavor of 10% by mass milk

Table 2

| Emulsifier Formulated in Evaluation Sample | Milk Flavor Evaluation Points |
|---|---|
| None (Evaluation Sample Only) | 4.0 |

(continued)

| Emulsifier Formulated in Evaluation Sample | Milk Flavor Evaluation Points |
|---|---|
| Sunsoft No. 818H | 5.0 |
| Ryoto Sugar Ester ER-290 | 4.4 |
| Sunsoft A-173E | 4.0 |

As shown in Table 2, the evaluation sample (diluted milk, equivalent to 19.9% by mass milk) has an evaluation higher than 2 points of the reference diluted milk (20% by mass milk) with almost the same concentration of milk, so that it can be said that the milk flavor is improved. Also, as shown in Table 2, it was confirmed that the milk flavor is further improved by containing an emulsifier having an HLB of 4.5 or less.

[Evaluation of milk coffee]

(Milk coffee)

To 99.6 parts by mass of milk (milk solids-not-fat 8.8% by mass), a total of 0.4 parts by mass of caprylic acid (Tokyo Chemical Industry Co., Ltd.), capric acid (Tokyo Chemical Industry Co., Ltd.), and MCT (product name "O.D.O," manufactured by The Nisshin OilliO Group, Ltd., triglyceride of caprylic acid and capric acid) were added and mixed. Furthermore, 400 parts by mass of coffee (trade name "Georgia Japan Craftsman Unsweetened Black," Coca-Cola (Japan) Company, Limited) was mixed to obtain an evaluation sample (milk coffee, equivalent to coffee containing 19.9% by mass milk).

It should be noted that caprylic acid and capric acid were dissolved in MCT in advance and mixed with coffee.

The blending amount of caprylic acid was adjusted to be 0 parts by mass, $12\times10^{-4}$ parts by mass, $48\times10^{-4}$ parts by mass, $240\times10^{-4}$ parts by mass, $480\times10^{-4}$ parts by mass, $1440\times10^{-4}$ parts by mass, $2400\times10^{-4}$ parts by mass, and $4800\times10^{-4}$ parts by mass per 100 parts by mass of milk solids-not-fat. The concentration of caprylic acid in the evaluation sample (milk coffee) at this time was 0 ppm by mass, 0.21 ppm by mass, 0.84 ppm by mass, 4.22 ppm by mass, 8.45 ppm by mass, 25.34 ppm by mass, 42.24 ppm by mass, and 84.48 ppm by mass, respectively.

Also, the blending amount of capric acid was adjusted to be 0 parts by mass, $1\times10^{-4}$ parts by mass, $4\times10^{-4}$ parts by mass, $16\times10^{-4}$ parts by mass, $80\times10^{-4}$ parts by mass, $160\times10^{-4}$ parts by mass, $480\times10^{-4}$ parts by mass, and $800\times10^{-4}$ parts by mass per 100 parts by mass of milk solids-not-fat. The concentration of capric acid in the diluted milk at this time was 0 ppm by mass, 0.02 ppm by mass, 0.07 ppm by mass, 0.28 ppm by mass, 1.41 ppm by mass, 2.82 ppm by mass, 8.45 ppm by mass, and 14.08 ppm by mass, respectively.

(Milk flavor evaluation 3)

Milk (milk solids-not-fat 8.8% by mass) and coffee (trade name "Georgia Japan Craftsman Unsweetened Black," Coca-Cola (Japan) Company, Limited) were mixed in a blending ratio (mass ratio) of 1:9 to 1:1 to prepare coffee containing 10% by mass milk, coffee containing 20% by mass milk, coffee containing 30% by mass milk, coffee containing 40% by mass milk, and coffee containing 50% by mass milk as reference milk coffees for milk flavor. Each reference milk coffee was taken into the mouth, and the milk flavor felt at that time was defined as 1 to 5 points as follows. The evaluation samples were taken into the mouth, and the points were given based on the points of the reference milk coffees. The evaluation was performed by a panel of 5 members, and the average score was used as the score of the evaluation samples, which is shown in Table 3.

<Milk flavor evaluation points>

5 points: Milk flavor of coffee containing 50% by mass milk
4 points: Milk flavor of coffee containing 40% by mass milk
3 points: Milk flavor of coffee containing 30% by mass milk
2 points: Milk flavor of coffee containing 20% by mass milk
1 point: Milk flavor of coffee containing 10% by mass milk

Table 3

Table 3

| | | | | Amount of caprylic acid per 100 parts by mass of milk solids-not-fat (×10⁻⁴ parts by mass) | | | | | | | |
|---|---|---|---|---|---|---|---|---|---|---|---|
| | | | | 0 | 12 | 48 | 240 | 480 | 1440 | 2400 | 4800 |
| | | | | Concentration of caprylic acid in milk coffee (ppm) | | | | | | | |
| | | | | 0.00 | 0.21 | 0.84 | 4.22 | 8.45 | 25.34 | 42.24 | 84.48 |
| Amount of capric acid per 100 parts by mass of milk solids-not-fat (×10⁻⁴ parts by mass) | 0 | Concentration of capric acid in milk coffee (ppm) | 0.00 | <u>2.0</u> | <u>2.0</u> | <u>2.0</u> | <u>2.0</u> | <u>2.0</u> | <u>2.0</u> | <u>1.4</u> | <u>1.0</u> |
| | 1 | | 0.02 | <u>2.0</u> | <u>2.0</u> | <u>2.0</u> | <u>2.4</u> | <u>2.6</u> | <u>2.0</u> | <u>1.6</u> | <u>1.0</u> |
| | 4 | | 0.07 | <u>2.0</u> | <u>3.0</u> | <u>3.0</u> | <u>3.4</u> | <u>3.6</u> | <u>3.2</u> | <u>2.0</u> | <u>1.0</u> |
| | 16 | | 0.28 | <u>2.0</u> | <u>3.0</u> | <u>3.0</u> | <u>3.6</u> | <u>3.8</u> | <u>3.4</u> | <u>3.0</u> | <u>1.0</u> |
| | 80 | | 1.41 | <u>2.0</u> | <u>3.0</u> | <u>3.4</u> | <u>4.0</u> | <u>4.6</u> | <u>3.6</u> | <u>3.0</u> | <u>1.0</u> |
| | 160 | | 2.82 | <u>2.0</u> | <u>3.0</u> | <u>3.8</u> | <u>4.6</u> | <u>4.8</u> | <u>3.8</u> | <u>3.0</u> | <u>1.0</u> |
| | 480 | | 8.45 | <u>1.2</u> | <u>2.0</u> | <u>3.0</u> | <u>3.0</u> | <u>3.0</u> | <u>3.0</u> | <u>2.4</u> | <u>1.0</u> |
| | 800 | | 14.08 | <u>1.2</u> | <u>1.2</u> | <u>1.2</u> | <u>1.2</u> | <u>1.2</u> | <u>1.2</u> | <u>1.2</u> | <u>1.0</u> |

Note: Underlined numerical values stand for milk flavor evaluation points.

EP 4 449 887 A1

Note: Underlined numerical values stand for milk flavor evaluation points.

As shown in Table 3, the evaluation sample (milk coffee, equivalent to coffee containing 19.9% by mass milk) has an evaluation higher than 2 points of the reference milk coffee (coffee containing 20% by mass milk) with almost the same concentration of milk, so that it can be said that the milk flavor is improved. As shown in Table 3, it was confirmed that the flavor of the milk coffee that satisfies the range of condition A (the food and/or beverages contain 0.001 to 0.2 parts by mass of caprylic acid and 0.0003 to 0.035 parts by mass of capric acid per 100 parts by mass of milk solids-not-fat in the food and/or beverages), and/or condition B (the food and/or beverages contain 0.0035 to 0.3 parts by mass of caprylic acid and 0.0013 to 0.055 parts by mass of capric acid per 100 parts by mass of milk solids-not-fat in the food and/or beverages) has an improved milk flavor compared to the reference milk coffee (coffee containing 20% by mass milk).

[Evaluation of lacto-ice]

(Reference lacto-ice)

Using 8 parts by mass of vegetable oils and/or fats (The Nisshin OilliO Group, Ltd., a blended oil of PMF : coconut oil=85: 15), 0.14 parts by mass of emulsifier (trade name "Emulsy MM Super V," Riken Vitamin Co., Ltd.), 0.14 parts by mass of locust bean gum, 0.07 parts by mass of guar gum (trade name "Guapack PF-20," DSP Gokyo Food & Chemical Co., Ltd.), 64.48 parts by mass of water, 5.00 parts by mass of liquid sugar (trade name "Nisshoku High Maltose Syrup MC-45," NIHON SHOKUHIN KAKO Co., Ltd.), 0.10 parts by mass of vanilla fragrance, 7.00 parts by mass of skimmed milk powder, and 15.00 parts by mass of sugar, a reference lacto-ice (milk solids-not-fat 7% by mass) was manufactured.

The manufacturing procedure was as follows: water and liquid sugar were stirred and heated, and powdered raw materials (emulsifier, locust bean gum, guar gum, skimmed milk powder, sugar), vegetable oils and/or fats, and vanilla fragrance were added, and the mixture was heated to 80°C and held for 5 minutes to perform heat partial sterilization. Next, preliminary emulsification was performed using a homomixer, and then fine homogenization was performed under a pressure of 15 MPa using a homogenizer. The obtained emulsion was cooled by immersing in ice water, allowed to stand at 5°C for 12 hours, and an ice cream mix was prepared. The ice cream mix was cooled and stirred in an ice cream freezer (MODEL 0702, Taylor Commercial Foodservice, LLC) until the temperature reached -6°C, filled into cups, cooled in a freezer at -50°C for 24 hours, and the reference lacto-ice was manufactured.

(Lacto-ice 1 to 4)

The vegetable oils and/or fats of the reference lacto-ice were replaced with an oils and/or fats to which caprylic acid and capric acid were added, and lacto-ice 1 to 4 (milk solids-not-fat 7% by mass) were manufactured in the same manner as the reference lacto-ice. The content of caprylic acid and capric acid in the oil phase, the content in lacto-ice, and the amount ($\times 10^{-4}$ parts by mass) per 100 parts by mass of milk solids-not-fat in lacto-ice are as shown in Table 4.

(Milk flavor evaluation 4)

The milk flavor of the reference lacto-ice was set as 1 point, and 1 to 5 points were defined as follows. Lacto-ice 1 to 4 were taken into the mouth and evaluated. The evaluation was performed by a panel of 5 members, and the evaluation was conducted while discussing with each other so that there was no individual difference in the evaluation points, and the average score was used as the score of the evaluation samples, which is shown in Table 4.

<Milk flavor evaluation points>

5 points: Extremely strong milk flavor is felt
4 points: Strong milk flavor is felt
3 points: Sufficient milk flavor is felt
2 points: Milk flavor is felt slightly weak (stronger milk flavor than the reference lacto-ice)
1 point: Same level of milk flavor as the reference lacto-ice

Table 4

Table 4

| | | Content in Oil Phase, ppm (Content in Lacto-ice, ppm) | Amount per 100 parts by mass of milk solids-not-fat ($\times 10^{-4}$ parts by mass) | Evaluation of Milk Flavor |
|---|---|---|---|---|
| Reference Lacto-ice | Caprylic Acid | - | - | 1.0 |
| | Capric Acid | - | - | |
| Lacto-ice 1 | Caprylic Acid | 210 (16.8) | 240 | 3.6 |
| | Capric Acid | 70 (5.6) | 80 | |
| Lacto-ice 2 | Caprylic Acid | 625 (50) | 714 | 4.0 |
| | Capric Acid | 125 (10) | 143 | |
| Lacto-ice 3 | Caprylic Acid | 1250 (100) | 1428 | 4.0 |
| | Capric Acid | 250 (20) | 286 | |
| Lacto-ice 4 | Caprylic Acid | 1875 (150) | 2143 | 3.0 |
| | Capric Acid | 375 (30) | 429 | |
| Lacto-ice 1 to 4 all had an improved milk flavor compared to the reference lacto-ice. | | | | |

[Evaluation of whipped cream]

(Reference whipped cream)

Vegetable oils and/or fats (The Nisshin OilliO Group, Ltd., a blended oil of palm kernel oil and PMF : palm kernel extremely hardened oils=59:20:21) (45 parts by mass), lecithin (manufactured by The Nisshin OilliO Group, Ltd.) (0.135 parts by mass), saturated fatty acid monoglycerides (trade name "Emulsy P100," Riken Vitamin Co., Ltd.) (0.062 parts by mass), and sorbitan fatty acid esters (Riken Vitamin Co., Ltd.) (0.089 parts by mass) were mixed at 70°C to obtain an oil phase. Also, water (49.99 parts by mass), sucrose fatty acid esters (trade name "Ryoto Sugar Ester S-1170," Mitsubishi Chemical Corporation) (0.125 parts by mass), skimmed milk powder (4.5 parts by mass), and sodium hexametaphosphate (0.100 parts by mass) were mixed at 70°C to obtain a water phase. The oil phase was added to the water phase, stirred and emulsified while heating to 80°C. Next, fine homogenization was performed under a pressure of 17 MPa using a homogenizer. The obtained emulsion was cooled by immersing in ice water, allowed to stand at 5°C for 12 hours, and whipped cream was manufactured. The whipped cream was adjusted to a temperature of 7°C, 7 parts by mass of sugar was added to 100 parts by mass of whipped cream, and the mixture was whipped using a Hobart mixer (manufactured by Hobart Japan) at about 120 rpm for 10 minutes until it stood up, and the reference whipped cream (milk solids-not-fat 4.5% by mass) was manufactured.

(Whipped cream 1 to 3)

The vegetable oils and/or fats of the reference whipped cream were replaced with oils and/or fats to which caprylic acid and capric acid were added, and whipped cream 1 to 3 (milk solids-not-fat 4.5% by mass) were manufactured in the same manner as the reference whipped cream. The content of caprylic acid and capric acid in the oil phase, the content in whipped cream, and the amount ($\times 10^{-4}$ parts by mass) per 100 parts by mass of milk solids-not-fat in whipped cream are as shown in Table 5.

(Milk flavor evaluation 5)

The milk flavor of the reference whipped cream was set as 1 point, and 1 to 5 points were defined as follows. Whipped cream 1 to 3 were taken into the mouth and evaluated. The evaluation was performed by a panel of 5 members, and the evaluation was conducted while discussing with each other so that there was no individual difference in the evaluation points, and the average score was used as the score of the evaluation samples, which is shown in Table 5.

<Milk flavor evaluation points>

5 points: Extremely strong milk flavor is felt
4 points: Strong milk flavor is felt
3 points: Sufficient milk flavor is felt
2 points: Milk flavor is felt slightly weak (stronger milk flavor than the reference whipped cream)
1 point: Same level of milk flavor as the reference whipped cream

Table 5

Table 5

| | | Content in Oil Phase, ppm (Content in Whipped Cream, ppm) | Amount per 100 parts by mass of milk solids-not-fat ($\times 10^{-4}$ parts by mass) | Evaluation of Milk Flavor |
|---|---|---|---|---|
| Reference Whipped Cream | Caprylic Acid | - | - | 1.0 |
| | Capric Acid | - | - | |
| Whipped Cream 1 | Caprylic Acid | 30 (13.5) | 300 | 3.6 |
| | Capric Acid | 10 (4.5) | 100 | |
| Whipped Cream 2 | Caprylic Acid | 60 (27) | 600 | 4.0 |
| | Capric Acid | 20 (9) | 200 | |
| Whipped Cream 3 | Caprylic Acid | 90 (40.5) | 900 | 3.0 |
| | Capric Acid | 30 (13.5) | 300 | |
| Whipped cream 1 to 3 all had an improved milk flavor compared to the reference whipped cream. | | | | |

[Evaluation of coffee cream]

(Reference coffee cream)

Vegetable oils and/or fats (The Nisshin OilliO Group, Ltd., sunflower oil) (25 parts by mass), sucrose fatty acid esters (trade name "Ryoto Sugar Ester S-170," Mitsubishi Chemical Corporation), sorbitan fatty acid esters (trade name "Poem S-60," Riken Vitamin Co., Ltd.) (0.10 parts by mass), succinic acid monoglycerides (Taiyo Kagaku Co., Ltd.) (0.05 parts by mass), and lecithin (The Nisshin OilliO Group, Ltd.) were mixed at 70°C to obtain an oil phase.

Also, water (68.79 parts by mass), sucrose fatty acid esters (trade name "Ryoto Sugar Ester S-1670," Mitsubishi Chemical Corporation) (0.50 parts by mass), sucrose fatty acid esters (trade name "Ryoto Sugar Ester S-570," Mitsubishi Chemical Corporation) (0.10 parts by mass), sodium phosphate dibasic (0.30 parts by mass), skimmed milk powder (2.0 parts by mass), and milk-derived sodium caseinate (3.0 parts by mass) were mixed at 70°C to obtain a water phase.

The oil phase was injected into the water phase, stirred and emulsified while heating to 80°C. Next, fine homogenization was performed under a pressure of 17 MPa using a homogenizer. The obtained emulsion was cooled by immersing in ice water, allowed to stand at 5°C for 12 hours or more, and the reference coffee cream (milk solids-not-fat 5.0% by mass) was manufactured.

(Coffee cream 1)

The vegetable oils and/or fats of the reference coffee cream were replaced with oils and/or fats prepared by adding caprylic acid and capric acid to sunflower oil, and coffee cream 1 (milk solids-not-fat 5.0% by mass) was manufactured in the same manner as the reference coffee cream. The content of caprylic acid and capric acid in the oil phase, the content in coffee cream, and the amount ($\times 10^{-4}$ parts by mass) per 100 parts by mass of milk solids-not-fat in coffee cream are as shown in Table 6.

(Milk flavor evaluation 6)

The milk flavor of the reference coffee cream was set as 1 point, and 1 to 5 points were defined as follows. Coffee cream 1 was taken into the mouth and evaluated. The evaluation was performed by a panel of 5 members, and the evaluation was conducted while discussing with each other so that there was no individual difference in the evaluation points, and the average score was used as the score of the evaluation samples, which is shown in Table 6.

<Milk flavor evaluation points>

5 points: Extremely strong milk flavor is felt
4 points: Strong milk flavor is felt
3 points: Sufficient milk flavor is felt
2 points: Milk flavor is felt slightly weak (stronger milk flavor than the reference coffee cream)
1 point: Same level of milk flavor as the reference coffee cream

Table 6

Table 6

| | | Content in Oil Phase, ppm (Content in Coffee Cream, ppm) | Amount per 100 parts by mass of milk solids-not-fat ($\times 10^{-4}$ parts by mass) | Evaluation of Milk Flavor |
|---|---|---|---|---|
| Reference Coffee Cream | Caprylic Acid | - | - | 1.0 |
| | Capric Acid | - | - | |
| Coffee Cream 1 | Caprylic Acid | 60 (15) | 300 | 4.0 |
| | Capric Acid | 20 (5) | 100 | |
| Coffee cream 1 had an improved milk flavor compared to the reference coffee cream. | | | | |

**Claims**

1. A method for improving milk flavor of food and/or beverages, comprising: formulating caprylic acid and capric acid in the food and/or beverages having a milk flavor so as to satisfy condition A and/or condition B, where

   Condition A: The food and/or beverages contain 0.001 to 0.2 parts by mass of caprylic acid and 0.0003 to 0.035 parts by mass of capric acid per 100 parts by mass of milk solids-not-fat in the food and/or beverages; and
   Condition B: The food and/or beverages contain 0.0035 to 0.3 parts by mass of caprylic acid and 0.0013 to 0.055 parts by mass of capric acid per 100 parts by mass of milk solids-not-fat in the food and/or beverages.

2. The milk flavor improving method according to claim 1, further comprising: formulating an emulsifier having an HLB of 4.5 or less in the food and/or beverages.

3. Food and/or beverages with improved milk flavor, comprising: caprylic acid and capric acid, and satisfying the following condition A and/or condition B, where

   Condition A: The food and/or beverages contain 0.001 to 0.2 parts by mass of caprylic acid and 0.0003 to 0.035 parts by mass of capric acid per 100 parts by mass of milk solids-not-fat in the food and/or beverages; and
   Condition B: The food and/or beverages contain 0.0035 to 0.3 parts by mass of caprylic acid and 0.0013 to 0.055 parts by mass of capric acid per 100 parts by mass of milk solids-not-fat in the food and/or beverages.

4. The food and/or beverages according to claim 3, further comprising: an emulsifier having an HLB of 4.5 or less.

5. A milk flavor improver for food and/or beverages having a milk flavor, comprising: caprylic acid and capric acid, wherein a content ratio (mass ratio) of caprylic acid to capric acid is [caprylic acid content] : [capric acid content]=1:60 to 1000:1.

6. The milk flavor improver according to claim 5, further comprising: an emulsifier having an HLB of 4.5 or less.

7. A method for manufacturing food and/or beverages with improved milk flavor, comprising: formulating caprylic acid and capric acid in the food and/or beverages having a milk flavor so as to satisfy condition A and/or condition B, where

   Condition A: The food and/or beverages contain 0.001 to 0.2 parts by mass of caprylic acid and 0.0003 to 0.035 parts by mass of capric acid per 100 parts by mass of milk solids-not-fat in the food and/or beverages; and
   Condition B: The food and/or beverages contain 0.0035 to 0.3 parts by mass of caprylic acid and 0.0013 to 0.055 parts by mass of capric acid per 100 parts by mass of milk solids-not-fat in the food and/or beverages.

8. The manufacturing method according to claim 7, further comprising: formulating an emulsifier having an HLB of 4.5 or less in the food and/or beverages having a milk flavor.

<table>
<tr><td colspan="2" align="center">**INTERNATIONAL SEARCH REPORT**</td><td>International application No.<br><br>**PCT/JP2022/045894**</td></tr>
</table>

**A.    CLASSIFICATION OF SUBJECT MATTER**

*A23L 27/00*(2016.01)i; *A23C 9/00*(2006.01)i; *A23G 9/00*(2006.01)i
FI:    A23L27/00 Z; A23C9/00; A23G9/00 101

According to International Patent Classification (IPC) or to both national classification and IPC

**B.    FIELDS SEARCHED**

Minimum documentation searched (classification system followed by classification symbols)

A23L27/00; A23C9/00; A23G9/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII); FSTA/CAplus/AGRICOLA/BIOSIS/MEDLINE/EMBASE (STN)

**C.    DOCUMENTS CONSIDERED TO BE RELEVANT**

| Category* | Citation of document, with indication, where appropriate, of the relevant passages | Relevant to claim No. |
|---|---|---|
| X | WO 2013/118740 A1 (AJINOMOTO CO., INC.) 15 August 2013 (2013-08-15)<br>    examples 14-32, comparative examples 9, 12-13, tables | 1-8 |
| A | JP 62-151154 A (SODA KORYO KK) 06 July 1987 (1987-07-06)<br>    example 4 | 1-8 |
| A | JP 2008-263903 A (OGAWA & CO LTD) 06 November 2008 (2008-11-06)<br>    claims, example 4 | 1-8 |
| A | JP 2015-83000 A (NISSHIN OILLIO GROUP LTD) 30 April 2015 (2015-04-30)<br>    claims, examples | 1-8 |

☐ Further documents are listed in the continuation of Box C.          ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br><br>**21 February 2023** | Date of mailing of the international search report<br><br>**28 February 2023** |
|---|---|
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

INTERNATIONAL SEARCH REPORT
Information on patent family members

International application No.

**PCT/JP2022/045894**

| Patent document cited in search report | | | Publication date (day/month/year) | Patent family member(s) | | | Publication date (day/month/year) |
|---|---|---|---|---|---|---|---|
| WO | 2013/118740 | A1 | 15 August 2013 | TW 201350030 A examples 14-32, comparative examples 9, 12-13, tables | | | |
| JP | 62-151154 | A | 06 July 1987 | (Family: none) | | | |
| JP | 2008-263903 | A | 06 November 2008 | (Family: none) | | | |
| JP | 2015-83000 | A | 30 April 2015 | WO 2015/040856 A1 claims, examples | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018068224 A